# EUROPEAN PATENT SPECIFICATION

(11) **EP 1 630 826 B1**
(45) Date of publication and mention of the grant of the patent: **24.04.2019**
(21) Application number: 04745373.3
(22) Date of filing: 27.05.2004
(51) Int. Cl.: H01B 13/012, H01B 7/00

(54) **WIRE HARNESS ASSEMBLING METHOD AND WIRE HARNESS**
KABELBAUM-ZUSAMMENBAUVERFAHREN UND KABELBAUM
PROCÉDÉ D'ASSEMBLAGE DE FAISCEAU DE CÂBLES ET FAISCEAU DE CÂBLES

(30) Priority: 30.05.2003 JP 2003154691
(43) Date of publication of application: 01.03.2006
(73) Proprietor: YAZAKI CORPORATION, Minato-ku Tokyo 108-8333 (JP)
(72) Inventor: ANDO, Satoshi, Nasu-gun, Tochigi 324-0500 (JP)
(74) Representative: Viering, Jentschura & Partner mbB Patent- und Rechtsanwälte
(86) International application number: PCT/JP2004/007267
(87) International publication number: WO 2004/107356

(56) References cited:
- WO-A1-99/63551
- GB-A- 2 272 655
- JP-A- 8 335 409
- JP-A- 10 031 918
- JP-A- 10 031 918
- JP-A- 2003 059 354
- JP-B2- 2 827 771

## Description

### [TECHNICAL FIELD]

The present invention relates to a method of assembling a wiring harness to be mounted on a motor vehicle and so on for connecting electronic instruments and so on, and to a wiring harness.

### [BACKGROUND ART]

Various electronic instruments are mounted on a motor vehicle as a mobile unit. Therefore, the motor vehicle is provided with a wiring harness for transmitting power from a power source and control signals from a computer to the electronic instruments. The wiring harness includes a plurality of subharnesses. Each subharness is provided corresponding to a system mounted on a motor vehicle. Each subharness includes a plurality of electric wires and connectors attached to ends of the electric wires.

The electric wire (i.e. wire) includes an electrically conductive core wire and a coating made of insulating synthetic resin, which coats the core wire. The wire is a so-called coated wire. A connector includes a terminal fitting and a connector housing for receiving the terminal fitting. The terminal fitting is made of electrically conductive plate metal and attached to an end of the wire so as to be electrically connected to the core wire of the wire. The connector housing is made of insulating synthetic resin and formed in a box-shape. When the connector housing is coupled with the aforementioned electronic instrument, each wire in the wiring harness is electrically connected to the corresponding electronic instrument through the terminal fitting, thereby transmitting the desired electric power and signals to the electronic instruments.

When the wiring harness is assembled, first the wire is cut into a predetermined length with a cutting device and then the terminal fitting is attached to an end of the wire after the coating at the end of the wire is removed. Then, the terminal fitting is inserted into the connector housing, thereby assembling the subharness for the time being. Then, the assembled subharnesses are further assembled with each other, and exterior articles such as grommets or protectors are attached to the respective locations, thereby assembling a wiring harness.

GB 2 272 655 discloses a method of assembling a wiring harness having electric wires and connectors attached to ends of the electric wires comprising the steps of: measuring the length of the electric wires; cutting the electric wires; attaching terminal fittings of the connector to the electric wires; and coloring parts of outer surfaces of the electric wires by using a cutting device that is capable of coloring the outer surfaces of the electric wires so as to form subharness identifications on the outer surfaces of the electric wires. JP 8-335409 A discloses a wire harness comprising a plurality of modules, the modules each having electric wires and connectors attached to ends of the electric wires, wherein a module article number indication for indicating an article number of the module, in which the electric wire is used, is formed on the outer surface of the electric wire that is an element of module.

### [DISCLOSURE OF THE INVENTION]

### [PROBLEMS THAT THE INVENTION IS TO SOLVE]

In a step of assembling the above wiring harness, in most cases, the wires used in a plurality of the subharnesses are cut by one cutting device so as to attach the terminal fitting thereto. Accordingly, the wires cut by the cutting device and attaching the terminal fittings thereto are grouped into the subharnesses and transferred to an assembly line of the corresponding subharness.

The number of the wires that constitute the wiring harness has tended to increase as the number of the electronic instruments to be mounted on a motor vehicle has increased. Therefore, it has become difficult to group the wires into subharnesses at the cutting device,

resulting in that time and man-hour required in the assembly step of the wiring harness tends to increase.

It is therefore an objective of the present invention to provide a method of assembling a wiring harness and to provide a wiring harness, by which the increase in time and man-hour required in the assembly step of the wiring harness can be prevented or limited.

### [MEANS OF SOLVING THE PROBLEMS]

According to the present invention, a method of assembling a wiring harness as claimed in claim 1 is provided. A wiring harness according to the present invention is claimed in claim 4. The dependent claims show some examples of such a method or wiring harness, respectively.

In order to solve the above problem and to achieve the above objective, a method of assembling a wiring harness according to the present invention as defined in claim 1 is a method of assembling a wiring harness having a plurality of subharnesses, the subharnesses each having electric wires and connectors attached to ends of the electric wires, including the steps of:
measuring length of the electric wires;
cutting the electric wires;
attaching terminal fittings of the connectors to the electric wires;
coloring parts of outer surfaces of the electric wires by using a cutting device that is capable of coloring the outer surfaces of the electric wires so as to form subharness article number indications on the outer surfaces of the electric wires, the indications each indicating an article number of the subharness in which the electric wires are used;
grouping the electric wires, to which the terminal fittings are attached by using the cutting device, into the subharnesses depending on the article number so as to assemble the respective subharnesses; and
assembling the subharnesses with each other so as to assemble the wiring harness.

A color of the subharness article number indication is different for the different subharness.

The method of assembling a wiring harness according to the present invention as defined in claim 2 is the method defined in claim 1, characterized in that a coloring agent is spouted with a predetermined amount thereof per spouting toward the outer surface of the electric wire, so that the outer surface of the electric wire is colored with the coloring agent, thereby forming the subharness article number indication.

The method of assembling a wiring harness according to the present invention as defined in claim 3 is the method defined in claim 1 or 2, characterized in that the connector includes terminal fittings attached to ends of the electric wires and connector housings having terminal-receiving chambers for receiving the terminal fittings, the subharness article number indication indicates the terminal-receiving chamber into which the terminal fitting is received, and the terminal fittings are inserted into the respective terminal-receiving chambers according to the respective subharness article number indications, thereby assembling the subharness.

A wiring harness according to the present invention as defined in claim 4 is a wiring harness including a plurality of subharnesses, the subharnesses each having electric wires and connectors attached to ends of the electric wires, wherein a subharness article number indication for indicating an article number of the subharness, in which the electric wire is used, is formed on an outer surface of the electric wire that is an element of the subharness.

A color of the subharness article number indication is different for the different subharness.

A coloring agent is spouted with a predetermined amount thereof per spouting toward the outer surface of the electric wire, so that the outer surface of the electric wire is colored with the coloring agent, thereby forming the subharness article number indication.

The wiring harness according to the present invention as defined in claim 5 is the wiring harness defined in claim 4, characterized in that the connector includes terminal fittings attached to ends of the electric wires and connector housings having terminal-receiving chambers for receiving the terminal fittings, and the subharness article number indication indicates the terminal-receiving chamber into which the terminal fitting is received.

According to the present invention defined in claim 1, when the wire is cut and a terminal fitting is attached to the wire, the subharness article number indications that indicate the article numbers of the subharness are formed on the respective subharnesses. Therefore, the subharnesses, in which the wires are used, can be easily distinguished from each other by means of the subharness article number indications.

Since a color of the subharness article number indication is different for the different subharness, the subharnesses, in which the wires are used, can be more easily distinguished from each other. Also, by grouping the wires depending on the colors of the subharness article number indications, the wires can be easily grouped into the subharness.

According to the present invention defined in claim 2, the outer surface of the electric wire is colored with the coloring agent, so that the subharness article number indication is formed. Therefore, the subharness article number indication is prevented from coming off from the outer surface of the wire.

Further, a coloring agent is spouted with a predetermined amount thereof per spouting toward the outer surface of the electric wire, so that the subharness article number indication is formed. Therefore, the thickness of the subharness article number indication is prevented from unnecessarily increasing, thereby preventing the outer diameter of the wire from increasing.

According to the present invention defined in claim 3, the terminal fitting is inserted into the terminal-receiving chamber according to the subharness article number indication, thereby assembling the subharness. Therefore, the subharness can be easily assembled.

According to the present invention defined in claim 4, the subharness article number indication indicating the article number of the corresponding subharness is formed on the wire. Therefore, the subharness, in which the wires are used, can be easily distinguished from each other by means of the subharness article number indication.

Since the colors of the subharness article number indications are different from each other, therefore the subharness, in which the wires are used, can be more easily distinguished from each other. Also, by grouping the wires depending on the colors of the subharness article number indications, the wires can be easily grouped into the subharness.

The outer surface of the electric wire is colored with the coloring agent, so that the subharness article number indication is formed. Therefore, the subharness article number indication is prevented from coming off from the outer surface of the wire.

Further, a coloring agent is spouted with a predetermined amount thereof per spouting toward the outer surface of the electric wire, so that the subharness article number indication is formed. Therefore, the thickness of the subharness article number indication is prevented from unnecessarily increasing, thereby preventing the outer diameter of the wire from increasing.

According to the present invention defined in claim 5, the terminal fitting is inserted into the terminal-receiving chamber according to the subharness article number indication, thereby assembling the subharness. Therefore, the subharness can be easily assembled.

In this specification, the coloring agent means a liquid substance, in which a coloring material (organic substance for use in industry) is dissolved and dispersed in water or other solvent. The organic substance described above is a dye or a pigment (most of them being organic substances, i.e. synthetic substances). Sometimes, a dye is used as a pigment and a pigment is used as a dye. As an example, the coloring agent may be a coloring liquid or coating material. The coloring liquid is a liquid, in which a dye is dissolved or dispersed in a solvent. The coating material is a material, in which a pigment is dispersed in a liquid dispersion. When the outer surface of the coating is colored with a coloring liquid, the dye permeates into the coating. When the outer surface of the coating is colored with a coating material, the pigment adheres to the outer surface without permeating into the coating. In the specification, "to color the outer surface of the (electric) wire" means to dye a part of the outer surface of the wire with a dye or to coat a part of the outer surface of the wire with a pigment.

Preferably, the solvent and liquid dispersion have an affinity to the synthetic resin that constitutes the coating in order to allow the dye to securely permeate into the coating or to allow the pigment to securely adhere to the outer surface of the coating.

Further, in this specification, "spouting" means that a liquid coloring agent in a form of a liquid drop is vigorously ejected toward an outer surface of an electric wire.

### [EFFECTS OF THE INVENTION]

According to the present invention defined in claim 1, the subharnesses, in which the wires are used, can be easily distinguished from each other by means of the subharness article number indications. Therefore, by grouping the wires depending on the subharness article number indications, the wires can be easily grouped into the subharnesses. That is, the wires to which the terminal fittings are attached can be easily grouped into the subharnesses in which the wires are used, thereby preventing time and man-hour required to assemble a wiring harness from increasing.

By grouping the wires depending on the colors of the subharness article number indications, the wires can be easily grouped into the subharnesses. Therefore, the wires to which the terminal fittings are attached can be easily grouped into the subharnesses in which the wires are used, thereby preventing time and man-hour required to assemble a wiring harness from increasing.

According to the present invention defined in claim 2, the outer surface of the electric wire is colored with the coloring agent, so that the subharness article number indication is formed. Therefore, the subharness article number indication is prevented from coming off from the outer surface of the wire, that is, a fine sight of the wires or wiring harness is prevented from being damaged.

Further, a coloring agent is spouted with a predetermined amount thereof per spouting toward the outer surface of the electric wire, so that the subharness article number indication is formed. Therefore, the thickness of the subharness article number indication is prevented from unnecessarily increasing, thereby preventing the outer diameter of the wire from increasing.

According to the present invention defined in claim 3, the terminal fitting is inserted into the terminal-receiving chamber according to the subharness article number indication, thereby assembling the subharness. Therefore, the subharness can be easily assembled, thereby preventing time and man-hour required to assemble a wiring harness from increasing.

According to the present invention defined in claim 4, the subharness, in which the wires are used, can be easily distinguished from each other by means of the subharness article number indication. Therefore, by grouping the wires depending on the subharness article number indications, the wires can be easily grouped into the subharnesses. That is, the wires to which the terminal fittings are attached can be easily grouped into the subharnesses in which the wires are used, thereby preventing time and man-hour required to assemble a wiring harness from increasing.

By grouping the wires depending on the colors of the subharness article number indications, the wires can be easily grouped into the subharnesses. Therefore, the wires to which the terminal fittings are attached can be easily grouped into the subharnesses in which the wires are used, thereby preventing time and man-hour required to assemble a wiring harness from increasing.

The outer surface of the electric wire is colored with the coloring agent, so that the subharness article number indication is formed. Therefore, the subharness article number indication is prevented from coming off from the outer surface of the wire, that is, a fine sight of the wires or wiring harness is prevented from being damaged.

Further, a coloring agent is spouted with a predetermined amount thereof per spouting toward the outer surface of the electric wire, so that the subharness article number indication is formed. Therefore, the thickness of the subharness article number indication is prevented from unnecessarily increasing, thereby preventing the outer diameter of the wire from increasing.

According to the present invention defined in claim 5, the terminal fitting is inserted into the terminal-receiving chamber according to the subharness article number indication, thereby assembling the subharness. Therefore, the subharness can be easily assembled, thereby preventing time and man-hour required to assemble a wiring harness from increasing.

### [BEST MODE FOR CARRING OUT THE INVENTION]

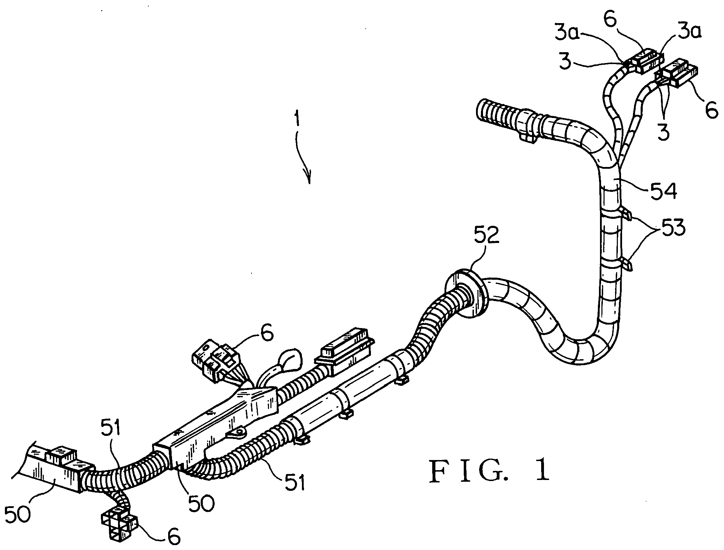

In the following, a wiring harness according to a preferred embodiment of the present invention will be explained with reference to Figs. 1 - 9. A wiring harness 1 is mounted on a motor vehicle and so on in order to transmit electric power or signals to electronic instruments mounted on the motor vehicle and so on.

As shown in Fig. 1, the wiring harness 1 includes various exterior articles such as a plurality of subharnesses 2 (shown in Figs. 2 and 3), harness protectors (hereinafter, protectors) 50, harness tubes (hereinafter, tubes) 51, harness grommet (hereinafter, grommet) 52, wiring clips 53, and harness tape (hereinafter, tape) 54.

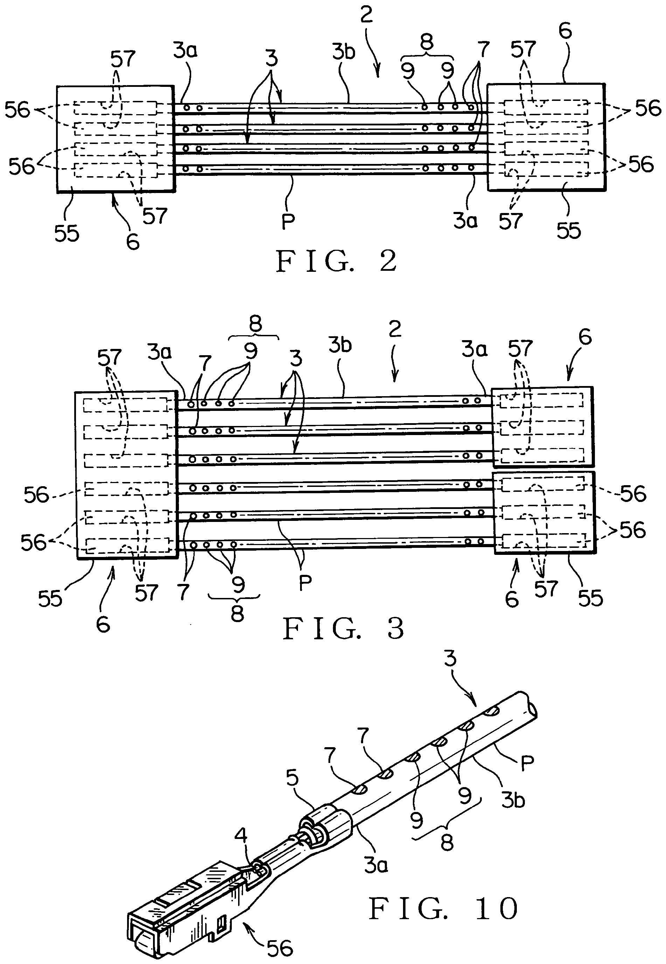

As for an example shown in the figure, shown are the first subharness shown in Fig. 2 as a subharness 2 and the second subharness shown in Fig. 3 as a subharness 2. The wiring harness 1 includes N (N: natural number) of the subharnesses 2.

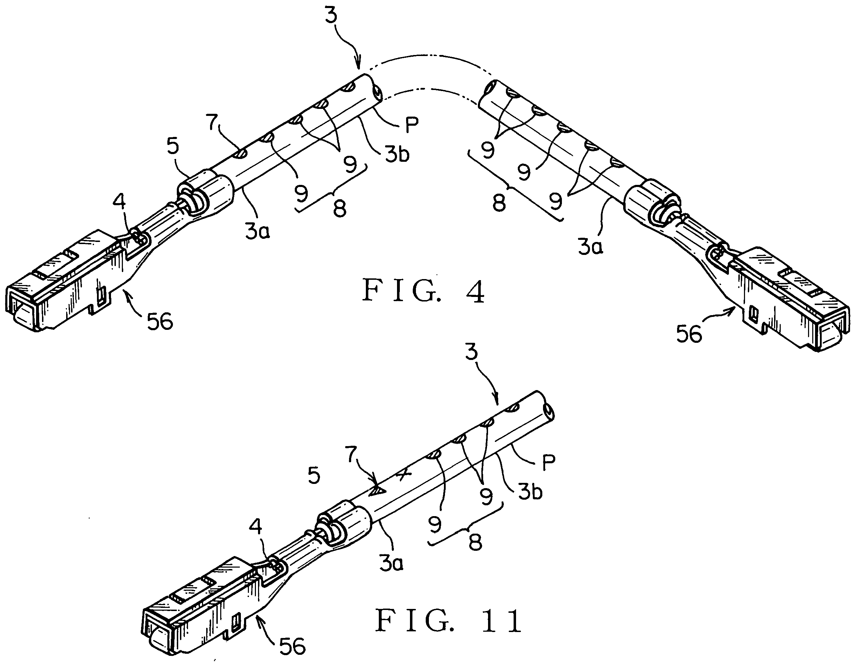

As shown in Figs. 2 and 3, the subharness 2 includes a plurality of electric wires (i.e. wires) 3 and connectors 6 attached to ends 3a of the wires 3. As shown in Fig. 4, the wire 3 includes an electrically conductive core wire 4 and an electrically insulating coating 5. A plurality of element wires are bundled up to form the core wire 4. Each element wire of the core wire 4 is made of electrically conductive metal. The core wire 4 may be constituted by a single element wire. The coating 5 is made of synthetic resin such as polyvinyl chloride (PVC). The coating 5 covers the core wire 4. Therefore, an outer surface 3b of the wire 3 is an outer surface of the coating 5.

The coating 5 has a monochrome color P. A desired coloring agent may be mixed with the synthetic resin of the coating 5 so as to make the color of the outer surface 3b of the wire 3 be a monochrome color P, or alternatively, the monochrome color P may be set as the color of the synthetic resin itself without adding a coloring agent to the synthetic resin of the coating 5. In the latter case, the outer surface 3b of the wire 3 is not colored, i.e. the coating 5 is not colored.

Subharness article number mark 7 (shown by parallel lines in Fig. 4) as the subharness article number indication and marks 8 are formed on the outer surface 3b of the wire 3. The subharness article number mark 7 is formed on an end part 3a of the wire 3. The subharness article number mark 7 is formed by coloring the outer surface 3b having the monochrome color P with a coloring agent explained later on.

The subharness article number mark 7 is formed in a round shape in its plan view. The subharness article number mark 7 indicates an article number of a subharness 2, in which the wires 3 are used. In the preferred embodiment, the subharness article number mark 7 indicates the corresponding article number of the subharness 2 since the colors are different from each other depending on subharness 2. For example, a subharness article number mark 7 of a wire 3 that constitutes the first subharness 2 has a red color, while a subharness article number mark 7 of a wire 3 that constitutes the second subharness 2 has a blue color.

The mark 8 includes a plurality of spots 9. The spot 9 is formed by coloring the outer surface 3b in a color different from the monochrome color P with a coloring agent explained later on. Each spot 9 is formed in a round shape in its plan view. A plurality of the spots 9 are lined up along the length direction of the wire 3 according to a predetermined pattern. In an example shown in the figure, the spots 9 are lined up at regular same intervals along the length direction of the wire 3. A distance between centers of the spots 9 adjacent to each other is predetermined.

Colors of the respective spots 9 of the mark 8 are changed into various colors, so that the wires 3 can be distinguished from each other. In an example shown in the figure, the colors of all the spots 9 of a wire 3 are the same color. However, the color may be changed depending on spot 9 according to a need, so that the colors of the spots 9 are different from each other. The colors of the respective spots 9 of the mark 8 are used to distinguish types of the wires 3 in the wiring harness 1 or to distinguish systems. That is, the colors of the respective spots 9 of the mark 8 are used to distinguish types of the wires 3 in the wiring harness 1 or to distinguish the purposes of use. The subharness article number mark 7 and the marks 8 are formed by coloring the outer surface 3b of the wire 3, that is, by spouting a coloring agent with a predetermined amount thereof per spouting toward the outer surface 3b of the wire 3.

As shown in Fig. 2, the connector 6 includes connector housings 55 and terminal fittings 56. The connector housing 55 is made of electrically insulating synthetic resin and formed in a box-shape. The connector housing 55 includes terminal-receiving chambers 57 for receiving the respective terminal fittings 56 therein. The terminal fitting 56 is made of electrically conductive plate metal and attached to the end part 3a of the wire 3 as shown in Fig. 4. The terminal fitting 56 is electrically connected to the core wire 4, that is, to the wire 3.

After the subharnesses 2 constructed as described above are assembled with each other, the exterior articles such as the protector 50, tube 51, grommet 52 and wiring clip 53 are attached to predetermined locations of the subharnesses 2. The tape 54 is wound around an outer periphery of the wire 3, which constitutes the corresponding subharness 2.

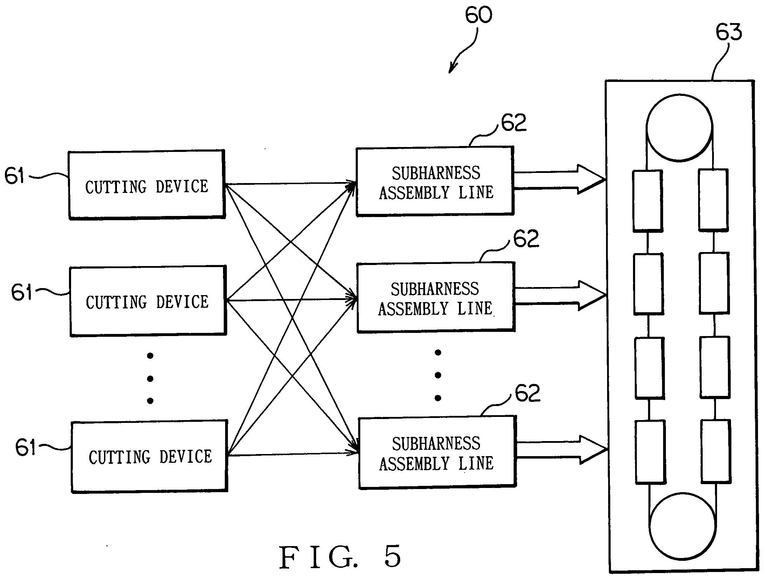

The wiring harness 1 is assembled by a wiring harness assembly device 60 shown in Fig. 5. The wiring harness assembly device 60 includes a plurality of cutting devices 61, a plurality of subharness assembly lines 62, and a wiring harness assembly line 63.

The cutting device 61 forms the mark 7 and marks 8 on the outer surface 3b having the monochrome color P of the wire 3, cuts the wire 3 into a predetermined length, and attaches the terminal fitting 56 to the end parts 3a of the wire 3.

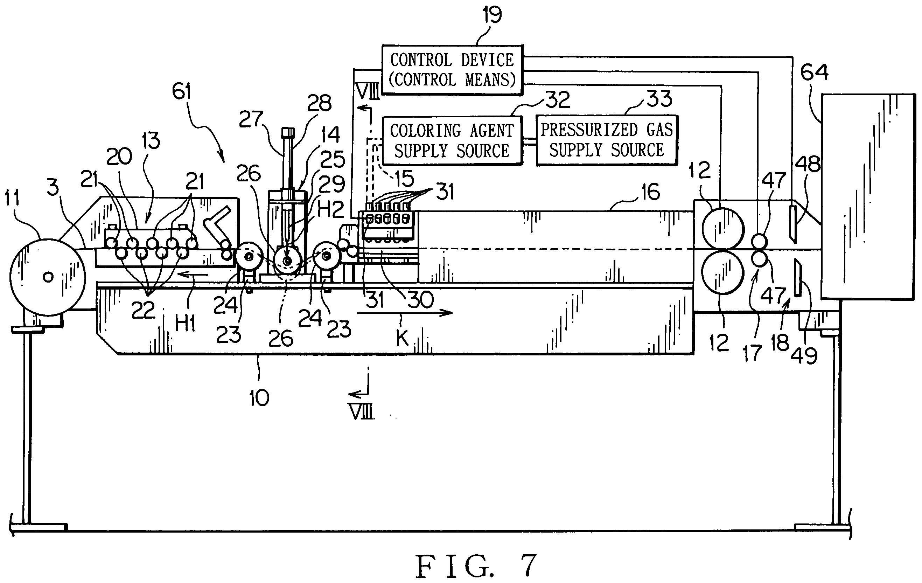

As shown in Fig. 7, the cutting device 61 includes a frame 10 as a body of the device, guide roll 11, delivery rolls 12, correction unit 13 for correcting the wire 3, slack absorbing unit 14 for absorbing slack, coloring unit 15, duct 16, encoder 17 as measuring means, cutting mechanism 18 as machining means, terminal-attaching unit 64, and control device 19 as control means.

The frame 10 is placed on a floor in a plant. The frame 10 extends in a horizontal direction. The guide roll 11 is rotatably attached to an end of the frame 10. The guide roll 11 winds up a long wire 3, on which the marks 7 and 8 are not formed. The guide roll 11 forwards the wire 3 by way of the correction unit 13, slack absorbing unit 14, coloring unit 15, duct 16, encoder 17 and cutting mechanism 18 in sequence.

A pair of the delivery rolls 12 is placed at an opposite end of the frame 10. The pair of the delivery rolls 12 is rotatably supported by the frame 10 and arranged in a vertical direction. The delivery rolls 12 are rotated by a motor (not shown in the figure) with the same number of revolutions in respective directions, which are reverse to each other. The delivery rolls 12 put the wire 3 therebetween and pull the wire 3 in the longitudinal direction of the wire 3 from the guide roll 11.

The delivery rolls 12 are pulling means, which pull and transfer the wire 3 in the longitudinal direction of the wire 3. Thus, the delivery rolls 12 transfer the wire 3 in the longitudinal direction of the wire 3, so that the delivery roll 12 move a coloring nozzle 31 (explained later on) of the coloring unit 15 and the wire 3 relatively to each other in the longitudinal direction of the wire 3. That is, the wire 3 is transferred from the guide roll 11 toward the delivery roll 12 in a direction of an arrow K shown in Fig. 7. That is, the arrow K shows the transferring direction of the wire 3.

The correction unit 13 is placed on the delivery roll 12-side of the guide roll 11. That is, the correction unit 13 is placed between the guide roll 11 and the delivery roll 12. That is, the correction unit 13 is placed on the downstream side of the guide roll 11 in the transferring direction K of the wire 3. That is, the correction unit 13 is placed on the upstream side of the delivery roll 12 in the transferring direction K of the wire 3. The correction unit 13 includes a plate-shaped unit body 20, a plurality of first rollers 21 and a plurality of second rollers 22. The unit body 20 is fixed on the frame 10.

A plurality of the respective first and second rollers 21, 22 are rotatably supported by the unit body 20. A plurality of the first rollers 21 are arranged in a horizontal direction (in the transferring direction K) above the wire 3. A plurality of the second rollers 22 are arranged in a horizontal direction (in the transferring direction K) below the wire 3. As shown in Fig. 7, the first and second rollers 21 and 22 are arranged zigzag.

The correction unit 13 puts the wire 3, which is forwarded by the delivery roll 12 from the guide roll 11, between the first rollers 21 and the second rollers 22, thereby making the wire 3 straight. By putting the wire 3 between the first rollers 21 and the second rollers 22, the correction unit 13 gives friction force to the wire 3. That is, the correction unit 13 gives first bias force H1 having a direction reverse to the direction, in which the delivery roll 12 pulls the wire 3 (i.e. the transferring direction K), to the wire 3. The first bias force H1 is smaller than the force that the delivery roll 12 pulls the wire 3. Therefore, the correction unit 13 gives the tension having a direction, which is along the longitudinal direction of the wire 3, to the wire 3.

The slack absorbing unit 14 is placed on the delivery roll 12-side of the correction unit 13. That is, the slack absorbing unit 14 is placed between the correction unit 13 and the delivery roll 12. That is, the slack absorbing unit 14 is placed on the downstream side of the correction unit 13 in the transferring direction K of the wire 3. The slack absorbing unit 14 is placed on the upstream side of the delivery roll 12 in the transferring direction K of the wire 3. The slack absorbing unit 14 is placed between the correction unit 13 and a coloring nozzle 31 (explained later on) of the coloring unit 15.

As shown in Fig. 7, the slack absorbing unit 14 includes a pair of guide roller supporting frames 23, a pair of guide rollers 24, transfer roller supporting frame 25, transfer roller 26, and air cylinder 27 as bias means (i.e. energizing means). The pair of the guide roller supporting frames 23 is fixed on the frame 10. The pair of the guide roller supporting frames 23 stands up from the frame 10. The guide roller supporting frames 23 are arranged having a distance therebetween in the transferring direction K of the wire 3.

The pair of the guide rollers 24 is rotatably supported by the pair of the guide roller supporting frames 23. The guide roller 24 is arranged below the wire 3 and comes in contact with the wire 3 on the outer peripheral surface thereof so as to guide the wire 3 in the transferring direction K of the wire 3 preventing the wire 3 from coming off from the transferring direction K.

The transfer roller supporting frame 25 is fixed on the frame 10. The transfer roller supporting frame 25 stands up from the frame 10. The transfer roller supporting frame 25 is placed between the pair of the guide roller supporting frames 23.

The transfer roller 26 is rotatably supported by the transfer roller supporting frame 25 movably in the vertical direction. The transfer roller 26 is arranged above the wire 3. The transfer roller 26 is supported movably in the vertical direction, that is, the transfer roller 26 is supported movably in a direction crossing at right angles the transferring direction K of the wire 3. The transfer roller 26 is placed in the middle of the pair of the guide rollers 24.

The air cylinder 27 includes a cylinder body 28 and stretchable rod 29 stretchable from the cylinder body 28. The cylinder body 28 is fixed to the transfer roller supporting frame 25 and arranged above the wire 3. The stretchable rod 29 extends downward from the cylinder body 28. That is, the stretchable rod 29 extends from the cylinder body 28 in a direction in which the stretchable rod 29 approaches toward the wire 3.

The transfer roller 26 is attached to the stretchable rod 29. By receiving pressurized gas in the cylinder body 28, the air cylinder 27 energizes the stretchable rod 29 (or the transfer roller 26) downward in a direction crossing at right angles the transferring direction K of the wire 3 with a second bias force H2 (shown in Fig. 7). That is, the air cylinder 27 energizes the transfer roller 26 in a direction in which the transfer roller 26 approaches toward the wire 3 with the second bias force H2. The second bias force H2 is smaller than the first bias force H1.

Since cutting blades 48 and 49 of a pair of the cutting blades 48, 49 (explained later on) in the cutting mechanism 18 approach each other so as to cut the wire 3, if the wire 3 advances in the transferring direction K with inertia when the wire 3 is stopped to be cut, the wire 3 slackens between the pair of the guide rollers 24. At this time, in the slack absorbing unit 14, since the air cylinder 27 energizes the transfer roller 26 with the second bias force H2, the stretchable rod 29 of the air cylinder 27 extends, so that the transfer roller 26 is displaced to, for example, a position, which is indicated by an alternate long and two short dashes line in Fig. 7. Then, the slack absorbing unit 14 energizes the wire 3, which slackens between the pair of the guide rollers 24, in the direction crossing at right angles the transferring direction K of the wire 3 so as to absorb the slack, thereby keeping the wire 3 stretched.

The coloring unit 15 is placed on the delivery roll 12-side of the slack absorbing unit 14. That is, the coloring unit 15 is placed between the slack absorbing unit 14 and the delivery roll 12. That is, the coloring unit 15 is placed on the downstream side of the slack absorbing unit 14 in the transferring direction K of the wire 3. The coloring unit 15 is placed on the upstream side of the delivery roll 12 in the transferring direction K of the wire 3. That is, the coloring unit 15 (i.e. the coloring nozzle 31 explained later on) is placed between the delivery roll 12 and the correction unit 13.

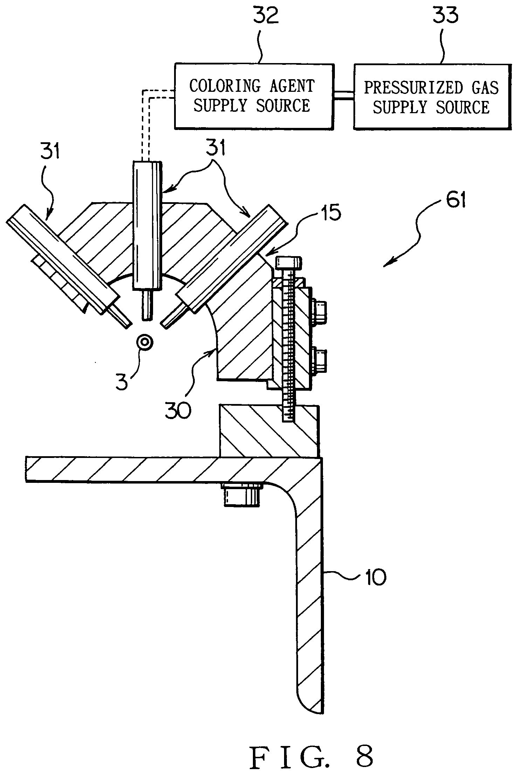

As shown in Fig. 8, the coloring unit 15 includes a unit body 30, a plurality of coloring nozzles 31, a plurality of coloring agent supply source 32 (only one source 32 being drawn in the figure and other sources 32 being omitted to be drawn) and pressurized gas supply source 33. The unit body 30 is fixed on the frame 10. The unit body 30 supports a plurality of the coloring nozzles 31.

The coloring nozzle 31 spouts a coloring agent supplied from the coloring agent supply source 32 toward the outer surface 3b of the wire 3 with a predetermined amount of the coloring agent per spouting. The coloring nozzle 31 allows spouted liquid drop (or drops) of the coloring agent to adhere to the outer surface 3b of the wire 3 so as to color (i.e. mark) at least a part of the outer surface 3b of the wire 3, thereby forming the marks 7 and 8 described above. The coloring nozzle 31 colors the outer surface 3b of the wire 3 in a different color for the different subharness 2, thereby forming the subharness article number indication 7.

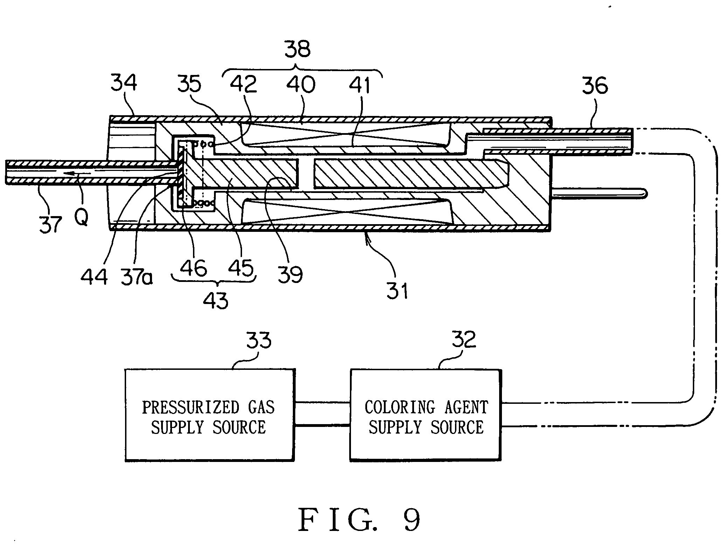

As shown in Fig. 9, the coloring nozzle 31 includes a cylindrical nozzle body 34, insert member 35 received in the nozzle body 34, inlet pipe 36, nozzle member 37 as the first nozzle part, and valve mechanism 38.

The insert member 35 is formed in a cylindrical shape and provided with a channel 39 to let the coloring agent pass therethrough. That is, the channel 39 is filled with the coloring agent supplied from the coloring agent supply source 32. The insert member 35 is a receiver for receiving the liquid coloring agent. The inlet pipe 36 communicates with the channel 39 to guide the coloring agent supplied from the coloring agent supply source 32 into the channel 39.

The nozzle member 37 is formed in a cylindrical shape and communicates with the channel 39 so as to guide the coloring agent in the channel 39 to the outside of the coloring nozzle 31. An inner diameter D of the nozzle member 37 is smaller than an inner diameter of the nozzle body 34, i.e. an outer diameter of the channel 39. The nozzle member 37 is aligned with the nozzle body 34. The nozzle member 37 is made of stainless steel.

The valve mechanism 38 includes a coil 40, valve body 41, and coil spring 42. The coil 40 is provided outside the channel 39 and embedded in the insert member 35. A current is applied to the coil 40 from the outside. The valve body 41 includes an electrically conductive body part 43 and valve element 44. The body part 43 integrally includes a cylindrical cylinder part 45 and disc-shaped disc part 46 which continues to an end of the cylinder part 45.

The disc part 46 of the body part 43 faces a base end 37a of the nozzle member 37. The body part 43 is received in the channel 39 in a state that the longitudinal direction of the cylinder part 45 is parallel to that of the nozzle body 34. The body part 43 (or the valve body 41) is provided movably in the longitudinal direction of the cylinder part 45, i.e. the longitudinal direction of the nozzle body 34.

The valve element 44 is attached to the disc part 46 of the body part 43. That is, the valve element 44 is received in the insert member 35. The valve element 44 faces the base end 37a of the nozzle member 37. The valve element 44 approaches or leaves the base end 37a of the nozzle member 37.

When the valve element 44 comes in contact with the base end 37a of the nozzle member 37, the coloring agent in the channel 39 is prevented from entering into the nozzle member 37, that is, the watertight condition between the valve element 44 and the base end 37a is attained. When the valve element 44 leaves the base end 37a of the nozzle member 37, the coloring agent is allowed to pass through the nozzle member 37 so as to be spouted toward the outer surface 3b of the wire 3.

Thus, the valve element 44 approaches or leaves the base end 37a between the opening position shown with an alternate long and two short dashes line in Fig. 9 and the closing position shown with a solid line in Fig. 9. At the opening position, the valve element 44 leaves the base end 37a, so that the coloring agent is allowed to pass through the nozzle member 37 so as to be spouted toward the outer surface 3b of the wire 3. At the closing position, the valve element 44 comes in contact with the base end 37a, so that the coloring agent is not allowed to pass through the nozzle member 37 to be spouted toward the outer surface 3b of the wire 3.

The coil spring 42 energizes the disc part 46 in such a direction that the valve element 44 approaches the base end 37a of the nozzle member 37.

The coloring nozzle 31 allows the coloring agent supplied from the coloring agent supply source 32 to flow through the inlet pipe 36 and guides the coloring agent into the channel 39. On a condition that a current is not applied to the coil 40, the valve element 44 comes in contact with the base end 37a of the nozzle member 37 due to the energizing force by the coil spring 42, thereby the coloring agent stays within the channel 39.

When a current is applied to the coil 40, the valve element 44 attached to the disc part 46 leaves the base end 37a of the nozzle member 37 against the energizing force by the coil spring 42, thereby allowing the coloring agent existing in the channel 39 to pass through the inside of the nozzle member 37 along the direction of the arrow Q. Thereby, the coloring nozzle 31 spouts the coloring agent from the nozzle member 37. A current is applied to the coil 40 for a predetermined period of time on the basis of a command from the control device 19. Therefore, the coloring nozzle 31 spouts the coloring agent with a predetermined amount of the coloring agent per spouting toward the outer surface 3b of the wire 3.

When a plurality of the coloring nozzles 31 are attached to the unit body 30, the coloring nozzles 31 are arranged in the transferring direction K of the wire 3 and also arranged in a peripheral direction around the wire 3. In an example shown in the figure, five coloring nozzles 31 are arranged in the transferring direction K of the wire 3 in the unit body 30. Three coloring nozzles 31 are arranged in the peripheral direction around the wire 3 in the unit body 30. The coloring nozzle 31 is the coloring means.

The coloring agent supply source 32 receives the coloring agent and supplies the coloring agent into an inlet pipe 36 of the coloring nozzle 31. Each coloring agent supply sources 32 mates with a coloring nozzles 31. The colors of the coloring agents supplied from the coloring agent supply sources 32 to the coloring nozzles 31 may be different from each other or, alternatively, the same with each other.

The pressurized gas supply source 33 supplies pressurized gas into the coloring agent supply sources 32. After the pressurized gas is supplied into the coloring agent supply sources 32, when a valve element 44 of the coloring nozzle 31 leaves a base end 37a of the nozzle member 37, the coloring agent contained in a channel 39 is spouted rapidly from the nozzle member 37.

In the coloring nozzle 31, on the basis of a command from the control device 19, a current flows into a coil 40 of the coloring nozzle 31 so that the valve element 44 leaves the base end 37a of the nozzle member 37. Then, the coloring unit 15 spouts the coloring agent contained in the channel 39 of the coloring nozzle 31 with a predetermined amount thereof per spouting toward the electric wire 3.

Preferably, the coloring agent has viscosity about 10 mPa·s (millipascal·second). The coloring agent means a liquid substance, in which a coloring material (organic substance for use in industry) is dissolved and dispersed in water or other solvent. The organic substance described above is a dye or a pigment (most of them being organic substances and synthetic substances). Sometimes, a dye is used as a pigment and a pigment is used as a dye. As an example, the coloring agent may be a coloring liquid or coating material.

The coloring liquid is a liquid, in which a dye is dissolved or dispersed in a solvent. The coating material is a material, in which a pigment is dispersed in a liquid dispersion. When the coloring liquid adheres to the outer surface 3b of the wire 3, the dye permeates into the coating 5. When the coating material adheres to the outer surface 3b of the wire 3, the pigment adheres to the outer surface 3b without permeating into the coating 5. That is, the coloring unit 15 dyes a part of the outer surface 3b of the wire 3 with a dye or, alternatively, coat a part of the outer surface 3b of the wire 3 with a pigment. In the specification, "to color the outer surface 3b of the electric wire 3" means to dye a part of the outer surface 3b of the coating 5 of the wire 3 with a dye or to coat a part of the outer surface 3b of the coating 5 of the wire 3 with a pigment.

Preferably, the solvent and liquid dispersion have an affinity to the synthetic resin that constitutes the coating 5 in order to securely permeate the dye into the coating 5 or to allow the pigment to securely adhere to the outer surface 3b of the coating 5.

In this specification, "spouting" means that the liquid coloring agent in a form of a liquid drop (or liquid drops) is ejected vigorously from the coloring nozzle 31 toward the outer surface 3b of the wire 3.

The duct 16 is placed on the delivery roll 12-side of the coloring unit 15. That is, the duct 16 is placed between the coloring unit 15 and the delivery roll 12. That is, the duct 16 is placed on the downstream side of the coloring unit 15 in the transferring direction K of the wire 3. The duct 16 is placed on the upstream side of the delivery roll 12 in the transferring direction K of the wire 3. The duct 16 is formed in a tube shape and allows the wire 3 to pass therethrough. The duct 16 is connected to suction means (not shown in the figure) such as a vacuum pump. The suction means sucks gas existing in the duct 16 so as to prevent solvent or liquid dispersion existing in the coloring agent from being filled outside the cutting device 61.

The encoder 17 is placed on the downstream side of the delivery roll 12 in the transferring direction K of the wire 3. As shown in Fig. 7, the encoder 17 includes a pair of rotors 47. Each rotor 47 is rotatably supported around the axis. The outer peripheral surface of the rotor 47 comes in contact with the outer surface 3b of the wire 3, which is put between the pair of the delivery rolls 12. When the wire 3 (i.e. core wire 4) is transferred in the direction K, the rotor 47 rotates around the axis. The amount of transfer of the wire 3 in the direction K is proportional to the number of revolutions of the rotor 47.

The encoder 17 is connected to the control device 19. When the rotor 47 rotates by a predetermined angle per rotation, the encoder 17 outputs a pulse signal to the control device 19. That is, the encoder 17 outputs an information in response to the transfer amount of the wire 3 in the direction K to the control device 19. Thus, the encoder 17 measures an information in response to the transfer amount of the wire 3 and outputs the information in response to the transfer amount of the wire 3 to the control device 19. Normally, the encoder 17 outputs a pulse signal in response to the transfer amount of the wire 3 on the basis of friction between the wire 3 and the rotor 47. However, in the event that the amount of the transfer of the wire 3 does not coincide with the number of the pulse due to a condition of the outer surface 3b of the wire 3, the speed information of the transfer of the wire 3 may be obtained from another position so that thus obtained speed information is subjected to feedback so as to make the output to be outputted to the control device 19.

The cutting mechanism 18 is placed on the downstream side of the pair of the rotors 47 of the encoder 17 in the transferring direction K of the wire 3. The cutting mechanism 18 includes a pair of cutting blades 48 and 49, each of which is arranged in the vertical direction. The cutting blades 48 and 49 approach or leave each other in the vertical direction. When the cutting blades 48 and 49 approach each other, they put the wire 3, which is delivered by the pair of the delivery rolls 12, therebetween and cut the wire 3. When the cutting blades 48 and 49 leave each other, they leave the wire 3.

The terminal-attaching unit 64 is placed on the downstream side of the cutting mechanism 18 in the transferring direction K of the wire 3. The terminal-attaching unit 64 removes the coating 5 at the end part 3a of the wire 3, in which the marks 7 and 8 are formed by the coloring unit 15 and which is cut into a predetermined length thereof by the cutting mechanism 18, and attached the terminal fitting 56 to the end part 3a.

The control device 19 is a computer including a known RAM, ROM and CPU. The control device 19 is connected to the delivery rolls 12, encoder 17, cutting mechanism 18, coloring nozzles 31 and so on. The control device 19 control the whole of the cutting device 61 by controlling actions of these components described above.

The control device 19 stores a pattern of the marks 7 and 8 in advance. When the control device 19 receives a predetermined pulse signal from the encoder 17, i.e. an information in response to the amount of transfer of the wire 3, the control device 19 applies a current to the coil 40 of the predetermined coloring nozzle 31 for a predetermined period of time so that the coloring agent is spouted from the coloring nozzle 31 toward the wire 3 with a predetermined amount of the coloring agent per spouting. According to the pattern of the marks 7 and 8 stored in advance, the control device 19 shortens a time interval of the spouting of the coloring agent from the coloring nozzle 31 when the transfer speed of the wire 3 increases, while the control device 19 elongates a time interval of the spouting of the coloring agent from the coloring nozzle 31 when the transfer speed of the wire 3 decreases. Thus, the control device 19 performs the coloring of the wire 3 according to the pattern stored in advance. The control device 19 allows the coloring nozzle 31 to spout the coloring agent with a predetermined amount thereof per spouting on the basis of the amount of the transfer of the wire 3, which amount of the transfer is measured by the encoder 17.

When the control device 19 judges that the wire 3 is transferred by a predetermined amount (i.e. distance) on the basis of the information from the encoder 17, the control device 19 halts the delivery roll 12, then allows the pair of the cutting blades 48 and 49 to approach each other so as to cut the wire 3. The control device 19 allows the terminal-attaching unit 64 to attach the terminal fitting 56 to the end part 3a of the wire 3, which is cut into a predetermined length by the cutting blades 48 and 49.

When the marks 7 and 8 are to be formed on the outer surface 3b of the wire 3, i.e. the outer surface 3b of the wire 3 is colored, the wire 3 is to be cut and the terminal fitting 56 is to be attached thereto in the cutting device 61, first the guide roll 11 is attached to the frame 10. Keeping the cutting blades 48 and 49 apart from each other, the wire 3 wound up around the guide roll 11 is passed through the correction unit 13, slack absorbing unit 14, coloring unit 15 and duct 16 in sequence and is put between the pair of the delivery rolls 12. Then, the coloring nozzle 31 is attached to a predetermined position of the unit body 30 of the coloring unit 15 and the coloring agent supply sources 32 are connected to the respective coloring nozzles 31. Further, the pressurized gas supply source 33 is connected to the coloring agent supply sources 32 and the gas existed in the duct 16 is sucked by the suction means.

Then, the delivery rolls 12 are driven so that the wire 3 is pulled from the guide roll 11 so as to be transferred in the longitudinal direction of the wire 3. The correction unit 13 gives friction force of the first bias force H1 to the wire 3 so as to stretch the wire 3. Then, the air cylinder 27 gives the second bias force H2 to the transfer roller 26, that is, to the wire 3.

When a pulse signal of predetermined sequence is inputted to the control device 19 from the encoder 17, the control device 19 applies a current to the coil 40 of the coloring nozzle 31 for a predetermined period of time per predetermined time interval. Then, the coloring nozzle 31 spouts the coloring agent with a predetermined amount thereof per spouting toward the outer surface 3b of the wire 3.

Then, the solvent or liquid dispersion is evaporated from the coloring agent adhered to the outer surface 3b of the wire 3, so that the outer surface 3b is dyed with a dye or coated with a pigment. The solvent or liquid dispersion evaporated from the coloring agent adhered to the outer surface 3b is sucked by the suction means from the duct 16. Thus, the outer surface 3b of the wire 3 is colored.

When the control device 19 judges that the wire 3 is transferred by a predetermined amount (i.e. distance) on the basis of the information from the encoder 17, the control device 19 halts the delivery roll 12. Then, the wire 3 slackens between the pair of the guide rollers 24 in the slack absorbing unit 14 and then, the transfer roller 26, which is energized with the second bias force H2, is shifted to a position indicated by an alternate long and two short dashes line in Fig. 7. Then, the stretchable rod 29 of the air cylinder 27 in the slack absorbing unit 14 stretches. Thus, the slack absorbing unit 14 absorbs the slack of the wire 3.

Then, the cutting blades 48 and 49 approach each other, put the wire 3 therebetween and cut the wire 3. Thereafter, the terminal-attaching unit 64 removes the coating 5 at the end part 3a of the wire 3 and attaches the terminal fitting 56 to the end part 3a. Thus, the marks 7 and 8 are formed on the outer surface 3b, and the wire 3 that is cut into a predetermined length and provided with the terminal fitting 56 at the end part 3a is obtained. Thus, the cutting device 61 measures the length of the wire 3, cuts the wire 3, attaches the terminal fitting 56 to the wire 3, and colors the outer surface 3b of the wire 3.

The wire 3, to which the terminal fitting 56 is attached and on which the marks 7 and 8 are formed is supplied from the cutting device 61 to a subharness assembly line 62. Each subharness assembly line 62 assembles subharnesses 2 having a corresponding article number. The subharnesses 2 are supplied from the respective subharness assembly lines 62 to a wiring harness assembly line 63. In the wiring harness assembly line 63, the subharnesses 2 are assembled with each other, various exterior articles 50, 51, 52 and 53 described above are attached to respective predetermined positions, and a tape 54 are wound up around the outer periphery of the wire 3. Then, in the wiring harness assembly line 63, inspection of outside appearance, inspection of electrical conduction and so on are carried out, thereby assembling the wiring harness 1 shown in Fig. 1.

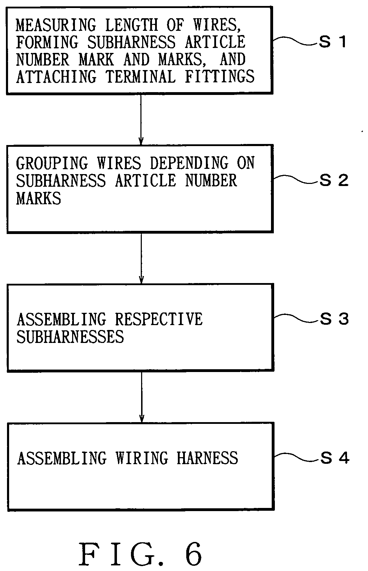

When the wiring harness 1 is to be assembled, first, at step S1 shown in Fig. 6, the cutting device 61 forms the marks 7 and 8 on the outer surface 3b of the wire 3. That is, the cutting device 61 colors a part of the outer surface 3b of the wire 3, so that the subharness article number indication 7 for indicating article numbers of the subharnesses 2, in which the wires 3 are used, is formed on the outer surface 3b of the electric wire 3. Then, the cutting device 61 cuts the wire 3 into a predetermined length and attaches the terminal fitting 56 to the end part 3a of the wire 3, then the process advances to step S2.

At step S2, an operator groups the wires 3 depending on the colors of the subharness article number marks 7. That is, the operator groups the wires 3, to which the terminal fittings 56 are attached by the cutting device 61, depending on the article numbers of the subharnesses, which are indicated by the subharness article number indications 7. Then, an operator supplies the wires 3 to the respective subharness assembly lines 62 and then, the process advances to step S3.

At step S3, an operator inserts the terminal fitting 56 into the connector housing 55 in the subharness assembly lines 62 so as to assemble the subharness 2. Then, an operator supplies the assembled subharnesses 2 to the wiring harness assembly line 63, then the process advances to step S4.

At step S4, an operator combines the subharnesses 2, attaches various exterior articles 50, 51, 52 and 53 to respective predetermined positions, winds a tape 54 up, and carries out inspection of outside appearance and inspection of electrical conduction, thereby assembling the wiring harness 1.

According to the preferred embodiment described above, the subharness article number mark 7 indicating the article number of the subharness 2 is formed on each wire 3. The subharness article number mark 7 is formed on each wire 3 when the wire 3 is cut and the terminal fitting 56 is attached thereto. Since the color of the subharness article number mark 7 is different for the different subharness 2, the subharness 2, in which the respective wires 3 are used, can be easily distinguished.

Therefore, by grouping the wires 3 depending on the subharness article number marks 7, the wires 3 can be easily grouped into the subharnesses 2. That is, the wires 3, to which the terminal fittings 56 are attached, can be easily grouped into the subharnesses 2, in which the wires 3 are used. Therefore, the time and man-hour required to assemble the wiring harness 1 can be prevented from increasing.

The outer surface 3b of the wire 3 is colored with the coloring agent, so that the marks 7 and 8 are formed. Therefore, the marks 7 and 8 can be securely prevented from abruptly coming off from the outer surface 3b of the wire 3. Therefore, a fine sight of the wire 3 or the wiring harness 1 can be prevented from being abruptly damaged due to abrupt coming off of the marks 7 and 8 from the outer surface 3b of the wire 3.

Further, the coloring agent is spouted with a predetermined amount thereof per spouting so as to form the marks 7 and 8. Therefore, the marks 7 and 8 can be prevented from becoming excessively thick and an outer diameter of the wire 3 can be prevented from increasing.

In the preferred embodiment described above, the coloring agent is spouted so as to form the marks 7 and 8. However, instead, the coloring agent may allowed to adhere to the outer surface 3b of the wire 3 by various means such as spraying to form the marks 7 and 8 in the present invention.

In the present invention, as the coloring liquid or coating material, various material may be used, such as acrylic coating material, ink (dye or pigment) and UV-ink.

Further, in the present invention, as shown in Fig. 10, a plurality of the subharness article number marks 7 may be formed, and as shown in Fig. 11, the subharness article number mark 7 may be formed in a form of character (i.e. letter) or figure. In a case shown in Figs. 10 and 11, the subharness article number mark 7 may indicate one terminal-receiving chamber 57 for receiving the terminal fitting 56, which is attached to the end part 3a of the wire 3, of a plurality of the terminal-receiving chambers 57 of the connector housing 55. That is, the subharness article number mark 7 indicates the terminal-receiving chamber 57 into which the terminal fitting 56 is received. Alternatively, the subharness article number mark 7 may indicate the order of inserting the terminal fitting 56 into the terminal-receiving chamber 57.

In a case shown in Figs. 10 and 11, the terminal fittings 56 are inserted into the respective terminal-receiving chambers 57 according to the subharness article number marks 7 so that the subharness 2 is assembled. Therefore, the subharness 2 can be easily assembled. Therefore, the time and man-hour required to assemble the wiring harness 1 can be prevented from increasing.

The aforementioned preferred embodiments are described to aid in understanding the present invention and variations may be made by one skilled in the art without departing from the scope of the present invention as defined by the appended claims.

### [BRIEF DESCRIPTION OF THE DRAWINGS]

[FIG. 1]
   A view illustrating a construction of a wiring harness according to a preferred embodiment of the present invention
[FIG. 2]
   A view illustrating a construction of the first subharness of the wiring harness shown in Fig. 1
[FIG. 3]
   A view illustrating a construction of the second subharness of the wiring harness shown in Fig. 1
[FIG. 4]
   A perspective view illustrating an electric wire, to which terminal fittings are attached, for constituting the subharness shown in Figs. 1 and 2
[FIG. 5]
   A view illustrating a construction of a wiring harness-assembling device for assembling the wiring harness shown in Fig. 1
[FIG. 6]
   A flow chart illustrating steps for assembling the wiring harness by the wiring harness-assembling device shown in Fig. 5
[FIG. 7]
   A side view illustrating a construction of a cutting device in the wiring harness-assembling device shown in Fig. 5
[FIG. 8]
   A cross sectional view illustrating a coloring unit of the cutting device taken along VIII - VIII line in Fig. 7
[FIG. 9]
   A cross sectional view illustrating a construction of each coloring nozzle of the coloring unit shown in Fig. 8
[FIG. 10]
   A perspective view illustrating another embodiment of an electric wire, to which terminal fittings are attached, as shown in Fig. 4
[FIG. 11]
   A perspective view illustrating a further embodiment of an electric wire, to which terminal fittings are attached, as shown in Fig. 4

### [ABBREVIATION NUMERALS]

1: wiring harness
2: subharness
3: electric wire
3a: end
3b: outer surface
6: connector
7: subharness article number mark (subharness article number indication)
55: connector housing
56: terminal fitting
57: terminal-receiving chamber
61: cutting device

## Claims

1. A method of assembling a wiring harness (1) having a plurality of subharnesses (2), the subharnesses (2) each having electric wires (3) and connectors attached to ends (3a) of the electric wires (3), comprising the steps of:
measuring length of the electric wires (3);
cutting the electric wires (3);
attaching terminal fittings (56) of the connectors to the electric wires (3);
coloring parts of outer surfaces (3b) of the electric wires (3) by using a plurality of cutting devices (61), wherein each cutting device is capable of coloring the outer surfaces (3b) of the electric wires (3) so as to form a plurality of subharness (2) article number indications (7) on the outer surfaces (3b) of the respective corresponding electric wires (3), the indications each indicating an article number of the subharness (2) in which the electric wires (3) are used;
grouping the electric wires (3), to which the terminal fittings (56) are attached by using the plurality of cutting devices (61), into the subharnesses (2) depending on the article number and supplying the wires (3) to respective subharness assembly lines (62) so as to assemble the respective subharnesses (2); and
assembling the subharnesses (2) with each other so as to assemble the wiring harness (1),
wherein a color of the subharness (2) article number indication (7) is different for the different subharness (2).

2. The method according to claim 1, wherein a coloring agent is spouted with a predetermined amount thereof per spouting toward the outer surface (3b) of the electric wire (3), so that the outer surface (3b) of the electric wire (3) is colored with the coloring agent, thereby forming the subharness (2) article number indication (7).

3. The method according to claim 1, or 2, wherein the connector includes terminal fittings (56) attached to ends (3a) of the electric wires (3) and connector housings (55) having terminal-receiving chambers (57) for receiving the terminal fittings (56), the subharness (2) article number indication (7) indicates the terminal-receiving chamber (57) into which the terminal fitting (56) is received, and the terminal fittings (56) are inserted into the respective terminal-receiving chambers (57) according to the respective subharness (2) article number indications (7), thereby assembling the subharness (2).

4. A wiring harness (1) comprising a plurality of subharnesses (2), the subharnesses (2) each having electric wires (3) and connectors attached to ends (3a) of the electric wires (3),
wherein a subharness (2) article number indication (7) for indicating an article number of the subharness, in which the electric wire (3) is used, is formed on an outer surface (3b) of the electric wire (3) that is an element of the subharness (2),
wherein a coloring agent is spouted with a predetermined amount thereof per spouting toward the outer surface (3b) of the electric wire, so that the outer surface (3b) of the electric wire (3) is colored with the coloring agent, thereby forming the subharness (2) article number indication (7),
wherein a color of the subharness (2) article number indication (7) is different for the different subharness (2), **characterized in that** marks (8) are formed by coloring on the outer surface (3b) of the wires (3),
wherein each mark (8) contains a plurality of spots (9), and
wherein colors of the spots (9) of each mark (8) are changed into various colors, so that the wires (3) can be distinguished from each other.

5. The wiring harness (1) according to claim 4, wherein the connector includes terminal fittings (56) attached to ends (3a) of the electric wires (3) and connector housings (55) having terminal-receiving chambers (57) for receiving the terminal fittings (56), and the subharness (2) article number indication (7) indicates the terminal-receiving chamber (57) into which the terminal fitting (56) is received.

## Patentansprüche

1. Ein Verfahren zum Zusammensetzen eines Kabelbaums (1), welcher eine Mehrzahl von Unterkabelbäumen (2) aufweist, wobei die Unterkabelbäume (2) jeweilig elektrische Leitungen (3) und Verbinder, welche an Enden (3a) der elektrischen Leitungen (3) angebracht sind, aufweisen, aufweisend die Schritte des:
Messens einer Länge der elektrischen Leitungen (3);
Zuschneidens der elektrischen Leitungen (3);
Anbringens von Anschlussstücken (56) der Verbinder an den elektrischen Leitungen (3),
Einfärbens von Teilen von Außenflächen (3b) der elektrischen Leitungen (3) unter Verwendung einer Mehrzahl von Schneidvorrichtungen (61), wobei jede Schneidvorrichtung in der Lage ist, die Außenflächen (3b) der elektrischen Leitungen (3) einzufärben, um eine Mehrzahl von Unterkabelbaum(2)-Artikelnummer-Angaben (7) auf den Außenflächen (3b) der jeweilig zugehörigen elektrischen Leitungen (3) zu bilden, wobei die Angaben jeweils eine Artikelnummer des Unterkabelbaums (2), in welchem die elektrischen Leitungen (3) genutzt werden, angeben,
Gruppierens der elektrischen Leitungen (3), an welchen die Anschlussstücke (56) unter Verwendung der Mehrzahl von Schneidvorrichtungen (61) angebracht sind, in die Unterkabelbäume (2) in Abhängigkeit von der Artikelnummer, und Liefern der Leitungen (3) an jeweilige Unterkabelbaum-Montagelinien (62), um die jeweiligen Unterkabelbäume (2) zusammenzusetzen, und
miteinander Zusammensetzens der Unterkabelbäume (2), um den Kabelbaum (1) zusammenzusetzen,
wobei eine Farbe der Unterkabelbaum(2)-Artikelnummer-Angabe (7) für den unterschiedlichen Unterkabelbaum (2) verschieden ist.

2. Das Verfahren gemäß Anspruch 1, wobei ein Färbemittel mit einer vorbestimmten Menge davon je Spritzung in Richtung der Außenfläche (3b) der elektrischen Leitung (3) gespritzt wird, so dass die Außenfläche (3b) der elektrischen Leitung (3) mit dem Färbemittel eingefärbt wird, wodurch die Unterkabelbaum(2)-Artikelnummer-Angabe (7) ausgebildet wird.

3. Verfahren gemäß Anspruch 1 oder 2, wobei der Verbinder Anschlussstücke (56), welche an Enden (3a) der elektrischen Leitungen (3) angebracht sind, und Verbindergehäuse (55), welche Anschlussaufnahmekammern (57) zum Aufnehmen der Anschlussstücke (56) aufweisen, aufweist, die Unterkabelbaum(2)-Artikelnummer-Angabe (7) die Anschlussaufnahmekammer (57), in welcher das Anschlussstück (56) aufgenommen wird, angibt und die Anschlussstücke (56) in die jeweiligen Anschlussaufnahmekammern (57) gemäß den jeweiligen Unterkabelbaum(2)-Artikelnummer-Angaben (7) eingebracht werden, wodurch der Unterkabelbaum (2) zusammengesetzt wird.

4. Ein Kabelbaum (1), welcher eine Mehrzahl von Unterkabelbäumen (2) aufweist, wobei die Unterkabelbäume (2) jeweilig elektrische Leitungen (3) und Verbinder, welche an Enden (3a) der elektrischen Leitungen (3) angebracht sind, aufweisen,
wobei eine Unterkabelbaum(2)-Artikelnummer-Angabe (7) zum Angeben einer Artikelnummer des Unterkabelbaums, in welchem die elektrische Leitung (3) verwendet wird, auf einer Außenfläche (3b) der elektrischen Leitung (3), welche ein Element des Unterkabelbaums (2) ist, ausgebildet ist,
wobei ein Färbemittel mit einer vorbestimmten Menge davon je Spritzung in Richtung der Außenfläche (3b) der elektrischen Leitung (3) gespritzt ist, so dass die Außenfläche (3b) der elektrischen Leitung (3) mit dem Färbemittel eingefärbt ist, wodurch die Unterkabelbaum(2)-Artikelnummer-Angabe (7) ausgebildet ist,
wobei eine Farbe der Unterkabelbaum(2)-Artikelnummer-Angabe (7) für den unterschiedlichen Unterkabelbaum (2) verschieden ist, **gekennzeichnet dadurch, dass** Markierungen (8) mittels Einfärbens auf der Außenfläche (3b) der Leitungen (3) ausgebildet sind,
wobei jede Markierung (8) eine Mehrzahl von Flecken (9) beinhaltet, und
wobei Farben der Flecken (9) jeder Markierung (8) in verschiedenen Farben abgeändert sind, so dass die Leitungen (3) voneinander unterschieden werden können.

5. Der Kabelbaum (1) gemäß Anspruch 4, wobei der Verbinder Anschlussstücke (56), welche an Enden (3a) der elektrischen Leitungen (3) angebracht sind, und Verbindergehäuse (55), welche Anschlussaufnahmekammern (57) zum Aufnehmen der Anschlussstücke (56) aufweisen, aufweist, und die Unterkabelbaum(2)-Artikelnummer-Angabe (7) die Anschlussaufnahmekammer (57), in welcher das Anschlussstück (56) aufgenommen wird, angibt.

## Revendications

1. Procédé d'assemblage d'un faisceau de câbles (1) ayant une pluralité de sous-faisceaux (2), les sous-faisceaux (2) ayant chacun des fils électriques (3) et des connecteurs reliés aux extrémités (3a) des fils électriques (3), comprenant les étapes consistant à :
mesurer la longueur des fils électriques (3) ;
couper les fils électriques (3) ;
relier les garnitures de bornes (56) des connecteurs aux fils électriques (3) ;
colorer des parties des surfaces externes (3b) des fils électriques (3) à l'aide d'une pluralité de dispositifs de découpe (61), chaque dispositif de découpe étant capable de colorer les surfaces externes (3b) des fils électriques (3) de façon à former une pluralité d'indications de références (7) de sous-faisceaux (2) sur les surfaces externes (3b) des fils électriques correspondants respectifs (3), les indications indiquant chacune une référence du sous-faisceau (2) dans lequel les fils électriques (3) sont utilisés ;
regrouper les fils électriques (3), auxquels les garnitures de bornes (56) sont reliées à l'aide de la pluralité de dispositifs de découpe (61), dans les sous-faisceaux (2) selon la référence, et fournir les fils (3) à des lignes d'assemblage de sous-faisceaux respectives (62) de façon à assembler les sous-faisceaux respectifs (2) ; et
assembler les sous-faisceaux (2) les uns avec les autres de façon à assembler le faisceau de câbles (1),
une couleur de l'indication de référence (7) du sous-faisceau (2) étant différente pour les différents sous-faisceaux (2).

2. Procédé selon la revendication 1, dans lequel un agent de coloration est versé selon une quantité prédéterminée de celui-ci lors de chaque versement sur la surface externe (3b) du fil électrique (3), de sorte que la surface externe (3b) du fil électrique (3) soit colorée avec l'agent de coloration, afin de former l'indication de référence (7) de sous-faisceau (2).

3. Procédé selon la revendication 1 ou 2, dans lequel le connecteur comprend des garnitures de bornes (56) reliées aux extrémités (3a) des fils électriques (3), et des logements de connecteurs (55) ayant des chambres de réception de bornes (57) destinées à recevoir les garnitures de bornes (56), l'indication de référence (7) des sous-faisceaux (2) indique la chambre de réception de borne (57) dans laquelle la garniture de borne (56) est reçue, et les garnitures de bornes (56) sont insérées dans les chambres de réception de bornes respectives (57) selon les indications de référence (7) de sous-faisceaux (2), afin d'assembler le sous-faisceau (2).

4. Faisceau de câbles (1) comprenant une pluralité de sous-faisceaux (2), les sous-faisceaux (2) ayant chacun des fils électriques (3) et des connecteurs reliés aux extrémités (3a) des fils électriques (3),
dans lequel une indication de référence (7) de sous-faisceau (2) destinée à indiquer une référence du sous-faisceau dans lequel le fil électrique (3) est utilisé est formée sur une surface externe (3b) du fil électrique (3) qui est un élément du sous-faisceau (2),
dans lequel un agent de coloration est versé selon une quantité prédéterminée de celui-ci lors de chaque versement sur la surface externe (3b) du fil électrique, de sorte que la surface externe (3b) du fil électrique (3) soit colorée avec l'agent de coloration, afin de former l'indication de référence (7) de sous-faisceau (2),
dans lequel une couleur de l'indication de référence (7) de sous-faisceau (2) est différente pour les différents sous-faisceaux (2), **caractérisé en ce que** des marques (8) sont formées par coloration sur la surface externe (3b) des fils (3),
dans lequel chaque marque (8) contient une pluralité de points (9), et
dans lequel les couleurs des points (9) de chaque marque (8) sont changées en couleurs différentes, de sorte que les fils (3) puissent être distingués les uns des autres.

5. Faisceau de câbles (1) selon la revendication 4, dans lequel le connecteur comprend des garnitures de bornes (56) reliées aux extrémités (3a) des fils électriques (3), et des logements de connecteurs (55) ayant des chambres de réception de bornes (57) destinées à recevoir les garnitures de bornes (56), et l'indication de référence (7) de sous-faisceau (2) indique la chambre de réception de borne (57) dans laquelle la garniture de borne (56) est reçue.
